# EUROPÄISCHE PATENTSCHRIFT

(11) **EP 1 769 551 B1**
(45) Veröffentlichungstag und Bekanntmachung des Hinweises auf die Patenterteilung: **03.03.2010**
(21) Anmeldenummer: 05763382.8
(22) Anmeldetag: 09.07.2005
(51) Int. Cl.: H01M 4/86, H01M 4/88, H01M 4/90, C25B 11/00

(54) **SILBER-GASDIFFUSIONSELEKTRODE FÜR DEN EINSATZ IN CO<sb>2</sb>-HALTIGER LUFT SOWIE VERFAHREN ZUR HERSTELLUNG**
SILVER GAS DIFFUSION ELECTRODE FOR USE IN AIR CONTAINING CO2, AND METHOD FOR THE PRODUCTION THEREOF
ELECTRODE DE DIFFUSION GAZEUSE A BASE D'ARGENT, DESTINEE A ETRE UTILISEE AVEC DE L'AIR CONTENANT DU CO2 ET SON PROCEDE DE PRODUCTION

(30) Priorität: 19.07.2004 DE 102004034885
(43) Veröffentlichungstag der Anmeldung: 04.04.2007
(73) Patentinhaber: Uhde GmbH, 44141 Dortmund (DE); Gaskatel Gesellschaft für Gassysteme durch Katalyse und Elektrochemie mbH, 34127 Kassel (DE)
(72) Erfinder: BECKMANN, Roland, 44534 Lünen (DE); DULLE, Karl-Heinz, 50399 Olfen (DE); WOLTERING, Peter, 48485 Neuenkirchen (DE); KIEFER, Randolf, 45892 Gelsenkirchen (DE); FUNCK, Frank, 46119 Oberhausen (DE); STOLP, Wolfram, 59071 Hamm (DE); KOHNKE, Hans-Joachim, 34123 Kassel (DE); HELMKE, Joachim, 34379 Calden (DE)
(86) Internationale Anmeldenummer: PCT/EP2005/007467
(87) Internationale Veröffentlichungsnummer: WO 2006/008014

(56) Entgegenhaltungen:
- WO-A-03/004726
- US-A- 3 553 032

## Beschreibung

Gegenstand der vorliegenden Erfindung ist eine Sauerstoff-Verzehr-Elektrode in alkalischen Elektrolyten für den Betrieb mit CO₂-haltigen Gasgemischen wie z.B. Luft, sowie deren Herstellung.

Alkalische Elektrolyte werden in der elektrochemischen Verfahrenstechnik seit mehr als 150 Jahren als lonenleiter eingesetzt. Sie vermitteln den Stromtransport in alkalischen Batterien und in alkalischen Elektrolyseuren und ebenfalls in alkalischen Brennstoffzellen. Einige dieser Systeme sind hermetisch abgeschlossen und kommen daher nicht mit Luftsauerstoff in Kontakt - andere hingegen, insbesondere die Chlor-Alkali-Elektrolyse und die alkalische Brennstoffzelle, müssen sogar mit Luftsauerstoff versorgt werden. Dabei hat sich experimentell ergeben, dass der Betrieb mit ungereinigter, CO₂-haltiger Luft die Betriebszeit der Anlage verringert.

Eine bekannte Reaktion der typischen, alkalischen Elektrolyte Kalilauge und Natronlauge mit dem Kohlendioxid der Luft führt zur Bildung von Carbonaten und Wasser:

***CO₂ + 2 KOH* - →** ***K₂CO₃ + H₂O*** (1)

Je nach pH-Wert der verbleibenden Lösung kristallisiert das Carbonat aus oder bleibt in Lösung. Dies ist aus verschiedenen Gründen nicht erwünscht:
- In der Chlor-Alkali-Elektrolyse soll Natronlauge hergestellt werden und nicht Natriumcarbonat. Die Karbonatisierung verringert also den Wirkungsgrad der Anlage.
- In alkalischen Brennstoffzellen wird die Leitfähigkeit der Kalilauge durch die Bildung von Kaliumcarbonat verringert. Insbesondere bei hohen Stromdichten macht sich dies bemerkbar und wirkt negativ auf den elektrischen Wirkungsgrad
- Bei Zink/Luft Zellen oder auch alkalischen Brennstoffzellen kann das Carbonat in den Poren der porösen Gasdiffusionselektrode kristallisieren und so den Luftzutritt vollständig blockieren. Damit wären die Batterien bzw. Brennstoffzellen unbrauchbar.

Aus diesen Gründen werden Systeme mit alkalischen Elektrolyten vorzugsweise nicht mit Luft betrieben, sondern nur mit reinem Sauerstoff bzw. es werden CO₂-Filter integriert. Je nach Menge des Luftdurchsatzes werden verschiedene Filterverfahren angewandt. Bei großen Luftmengen arbeiten Druckwechselanlagen wirtschaftlich. Bei kleineren Mengen muß ein Feststofffilter oder ein Flüssigkeitsfilter eingesetzt werden.

Das Problem der Karbonatisierung ist im einschlägigen Stand der Technik seit langem bekannt. Alkalische Brennstoffzellen (AFC) waren im Zeitraum 1950 bis 1975 umfangreich untersucht worden. Während der damaligen Energiekrisen wurde die AFC als umweltfreundlicher und effektiver Energiewandler angesehen. Daher wurden auch trotz der bekannten Karbonatisierung Untersuchungen gestartet, wie sich das Kohlendioxid der Luft auf die Wirksamkeit der Zellen auswirkt. Die damals erlangten Ergebnisse haben die Theorie bestätigt, dass ein Betrieb von alkalischen Brennstoffzellen mit ungereinigter Luft auf Dauer nicht möglich ist, weil die Zellen nach einigen hundert Stunden ausgefallen sind. Kern des Problems sind die Poren der Gasdiffusionselektrode, die durch Carbonate verstopft werden. Eine Zusammenfassung dieser Ergebnisse ist in einer Buchveröffentlichung finden bei "Kordesch, Hydrocarbon Fuel cell technology, Academic press, 1965, Seite 17- 23". Die Beobachtungen können soweit zusammengefasst werden, dass hydrophile Elektroden schneller karbonatisieren als hydrophobe Elektroden und die Karbonatisierung bei hohen Potentialen schneller abläuft als bei niedrigen Potentialen.

Eine neuere Beobachtung wurde unlängst bei "Gülzow, Journal of Power sources 127, 1-2, Seite 243, 2004" veröffentlicht. Hier wurde die Anreicherung von Karbonaten in Kalilauge während eines Dauerbetriebes gemessen. Im Gegensatz zu Kordeschs Beobachtungen tritt hier noch keine Sättigung der Karbonatisierung auf.

Gasdiffusionselektroden (im Folgenden als "GDE" bezeichnet) werden seit vielen Jahren in Batterien, Elektrolyseuren und Brennstoffzellen eingesetzt. Der elektrochemische Umsatz findet innerhalb dieser Elektroden nur an der sogenannten Drei-Phasen-Grenze statt. Als Drei-Phasen-Grenze wird der Bereich benannt, bei dem Gas, Elektrolyt und metallischer Leiter aufeinander treffen. Damit die GDE effektiv arbeitet, sollte der metallische Leiter gleichzeitig ein Katalysator für die gewünschte Reaktion sein. Typische Katalysatoren in alkalischen Systemen sind Silber, Nickel, Mangandioxid, Kohlenstoff, Platin u.v.a.m. Damit die Katalysatoren besonders wirksam sind, muß deren Oberfläche groß sein. Dies wird durch feine Pulver oder poröse Pulver mit innerer Oberfläche erreicht.

Der flüssige Elektrolyt wird in solche feinporigen Strukturen aufgrund der Kapillarwirkung hereingezogen. Je nach Viskosität, Oberflächenspannung und Porenradien erfolgt dies mehr oder weniger vollständig. Gerade bei alkalischen Elektrolyten ist aber die Kapillarwirkung besonders groß, weil Kalilauge und Natronlauge leicht benetzend wirken und bei den üblichen Einsatztemperaturen um 80°C die Viskosität niedrig ist.

Damit sich die GDE nicht vollständig mit Elektrolyt füllt - also auch der Zutritt von Gas leicht möglich ist - können drei Wege beschritten werden:
- Es werden Poren mit mehr als 10 µm Durchmesser erzeugt, die sich bei etwas erhöhtem Gasdruck (50 mbar) nicht mit Elektrolyt füllen können.
- Hydrophobe Materialien werden zum Teil in die Elektrodenstruktur eingebracht und verhindern so die Benetzung.
- Die Katalysatoroberflächen reagieren unterschiedlich hydrophob auf Elektrolyte. Insbesondere bei kohlenstoffhaltigen Katalysatoren kann durch gezielte Entfernung bestimmter Oberflächengruppen die Hydrophobizität verändert werden.

Typischerweise werden alle Wege bei der Herstellung von GDE realisiert. Die Porengröße kann durch das Ausgangsmaterial und durch zusätzliche Porenbildner eingestellt werden, außerdem haben die Herstellungsparameter Druck und Temperatur Einfluss auf die Porengröße. Die Hydrophobizität wird durch Kunststoffpulver - meist PTFE oder PE - und deren Massenanteil und Verteilung eingestellt. Die Hydrophobizität des Katalysators liegt im Material und dessen Herstellung/Behandlung begründet.

Es sind zwei grundsätzliche Verfahren zur Herstellung von Gasdiffusionselektroden aus Mischungen von PTFE und Katalysator bekannt. Diese sind in den Patentschriften DE 29 41 774 und US 3,297,484 beschrieben. Als Katalysator und metallischer Leiter werden meist Kohlenstoffe mit aufgetragenem Katalysator eingesetzt - in seltenen Fällen aber auch reine Metallkatalysatoren, wie z.B. in der WO 03/004726 A2 beschrieben. Besteht das System nur aus einer Komponente (reines Metall oder Legierung) und nicht aus einer heterogenen Mischung von Kohlenstoff und Metall (Trägerkatalysator), so sind die Benetzungseigenschaften auf mikroskopischer Ebene leichter einzustellen als bei Trägerkatalysatoren.

Bei der Entfernung von Kohlendioxid aus der Luft sind verschiedenste Verfahren bekannt. So kann die Luft durch eine Zeolith-Schüttung geführt werden, wie in der DE 699 02 409 beschrieben, die das Kohlendioxid aufnimmt, bis die Schüttungen gesättigt ist. Bei größeren Durchsätzen wird das Druckwechselverfahren angewandt, wie es zum Beispiel in DE 696 15 289 beschrieben wurde. Nicht weiter belegt, aber in Laboren als Standard eingesetzt, ist die Pottaschen-Herstellung, bei dem Kalilauge in Kaliumcarbonat umgewandelt wird durch die Aufnahme von CO₂.

Wodurch die Aufnahme des CO₂ in den Elektrolyten bei bestimmten Betriebsbedingungen nicht möglich ist, konnte noch nicht geklärt werden. Es liegt jedoch eine Vielzahl von Beobachtungen vor, die bestätigen, dass gut benetzende Elektroden zur Carbonatisierung neigen, wohingegen stark hydrophobe Elektroden dieses Verhalten nicht zeigen. Es könnte nun eine hinreichend hohe Hydrophobizität durch die starke Zugabe von PTFE-Pulver erreicht werden, wie sie vielfach in der Literatur angegeben wird. Damit wird aber auch der Gasaustausch verringert und die Leistungsfähigkeit der Elektrode sinkt. Um somit eine für den Betrieb mit CO₂-haltiger Luft geeignete Elektrode herzustellen, müssen alle Parameter, die eine Hydrophobizität ausmachen, erfüllt sein:

- Hydrophobe Katalysatoroberfläche.
   Durch die Benetzungseigenschaft des Katalysators wird die Hydrophobizität der kleinsten Poren der Gasdiffusionselektrode eingestellt. Hier zeichnet sich Silber durch eine maximal 2-molekulare Benetzung aus. Für eine amalgamierte Silberoberfläche ist die Benetzung sogar nur monomolekular.
- Hydrophobes Bindematerial:
   PTFE als Bindematerial der Elektrode kann aufgrund der schlechten Benetzbarkeit die Poren im Bereich von einigen Zehntelmillimetern bis zu 5 µm hydrophobieren. Eine gleichmäßige Hydrophobierung kann durch Suspensionsherstellung oder "Reactive Mixing" erreicht werden.
- Hydrophobe Porengröße:
   Aus den Betriebsbedingungen und dem Gesetz von Hagen-Poiseuille ergeben sich die makroskopischen Porenradien, die unter den genannten Bedingungen gerade nicht mehr mit Elektrolyt geflutet werden. Je nach Gasdruckverhältnis liegen diese zwischen 5 und 20 µm.
- pH-Wert:
   Eine zusätzliche Größe stellt der pH-Wert des Katalysators ein. Die Messung solcher pH-Werte ist für kohlenstoffhaltige Katalysatoren üblich. Durch eine saure Oberfläche wird allerdings vorhandenes Kaliumcarbonat sofort wieder zersetzt in Kalilauge und Kohlendioxid.

Insbesondere die Porengröße ist bei gewalzten Elektroden schwierig einzustellen, weil bei den nötigen Walzdrücken eine Kollabierung von großen Poren im Porensystem möglich ist. Die Aufgabe der Erfindung ist daher, ein verbessertes Verfahren zur Verfügung zu stellen, bei welchem die Porengröße und die übrigen Parameter derart eingestellt werden können, dass eine Karbonatisierung während des Elektrolysebetriebs nicht mehr stattfindet. Diese Aufgabe wird durch das Verfahren nach Patentanspruch 1 gelöst.

Um dieses Kollabieren zu verhindern wird folgender Weg beschritten: Analog dem Vorgehen der Patentschrift WO 03/004726 A2 wird bei der Herstellung des Elektrodenbandes ein zweistufiger Prozess durchlaufen, wobei zunächst in einem ersten Kalander die Katalysator/PTFE-Mischung zu einem dünnen Band ausgewalzt und anschließend in einem zweiten Kalander in einen metallischen Träger gebracht wird. Wie dort beschrieben wird dem Katalysatorpulver ein Füllstoff zugegeben, der die Walzkraft beim ersten Kalander aufnimmt.

Im Unterschied zum in WO 03/004726 A2 beschriebenen Verfahren wird dieser Füllstoff vor dem zweiten Kalander durch eine Aufheizungsvorrichtung, wie beispielsweise einem Heizgebläse, entfernt. Auf diese Weise gelangt eine Elektrode mit definiertem Porenradius in den zweiten Kalander. Weil dieser zweite Kalander die Elektrode in einen metallischen Träger bei geringem Kraftaufwand presst und man die Dickenänderung der Elektrode messen kann, wird dadurch auch die Verkleinerung des Porensystems messbar. Daher kann über die Einstellung des Walzenspaltes die hydrophobe Porengröße eingestellt werden.

Wie Langzeitversuche zeigten, findet eine Karbonatisierung mit der so hergestellten GDE-Elektrode auch bei Anwesenheit von CO₂ aus Luft nicht mehr statt und ein ungestörter Dauerbetrieb ist möglich.

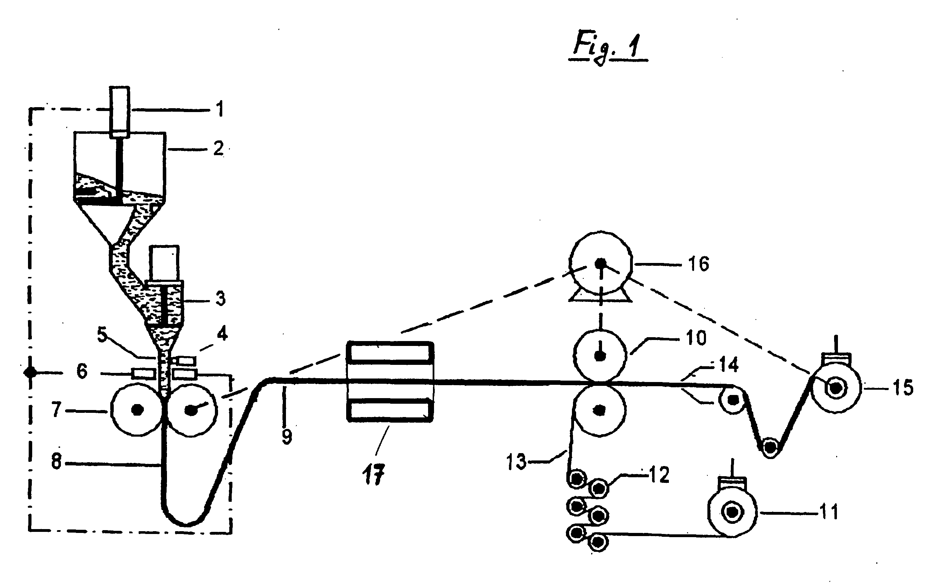

.Das Herstellungsverfahren der GDE wird in Fig. 1 näher erläutert, wobei die nachstehenden Bezugsziffern 1 bis 16 sowie die zugehörige Beschreibung denen der WO 03/004726 A2 entsprechen. Das Elektrodenfell 8, welches aus der Fellwalze 7, dem ersten Kalander, kommt, wird in den Aufheizungsvorrichtung 17 geleitet, wo das Elektrodenfell derart erwärmt wird, dass der Füllstoff aus dem Elektrodenfell entfernt wird. Die Erwärmung kann sowohl durch Radiation als auch durch Anblasung von Heißluft erfolgen, auch Kombinationen sind möglich.

### Bezugszeichenliste

- 1: Drehschieber
- 2: Vorratsbehälter
- 3: Schlagmühle
- 4: Pulvertrichter
- 5: Klopfer
- 6: Lichtschranke
- 7: Fellwalze
- 8: Elektrodenfell
- 9: Führungsschiene
- 10: Netzwalze
- 11: Netzrolle
- 12: Umlenkrolle
- 13: Ableiternetz
- 14: Kantenabstreifer
- 15: Haspel für Elektrodenband
- 16: Antriebsmotor
- 17: Aufheizungsvorrichtung

## Patentansprüche

1. Verfahren zur Herstellung einer Gasdiffusionselektrode aus einem Silberkatalysator auf PTFE-Substrat, wobei das Porensystem des Silberkatalysators mit einem benetzenden Füllstoff gefüllt wird, ein dimensionsstabiler Festkörper mit einer Korngröße oberhalb der des Silberkatalysators unter den Silberkatalysator gemischt wird, diese somit kompressionsstabile Masse in einem ersten Kalander zu einem homogenen Katalysatorband ausgeformt wird, in einem zweiten Kalander ein elektrisch leitfähiges Ableitermaterial in das Katalysatorband eingeprägt wird, **dadurch gekennzeichnet, dass** zwischen dem ersten und dem zweiten Kalander eine Aufheizung mittels einer Aufheizungsvorrichtung vorgenommen wird, bei der zumindest Teile des benetzenden Füllstoffs ausgetrieben werden.

2. Gasdiffusionselektrode, herstellbar nach dem Verfahren gemäß Anspruch 1.

3. Gasdiffusionslektrode nach Anspruch 2 enthaltend
• einen Katalysator, der eine angepasste Porenstruktur einer Größe von 5 bis 20 µm aufweist und dessen Oberflächenmaterial hydrophobe Eigenschaften besitzt, wobei
• das Katalysatormaterial aus einer Gruppe enthaltend Silber, das amalgamiert vorliegt, Nickel, Mangandioxid, Kohlenstoff und Platin ausgewählt wird, und
• der Katalysator durch eine zusätzliche PTFE- und/oder PE-Zugabe hydrophobiert wird.

4. Gasdiffusionslektrode nach Anspruch 3 **dadurch gekennzeichnet, dass** die alkalischen Elektrolyten aus Kalilauge oder Natronlauge bestehen.

## Claims

1. Process for the production of a gas diffusion electrode (GDE) from a silver catalyst on a PTFE substrate, the pore system of the silver catalyst being filled with a wetting type filler material, a dimensionally steady solid material with a grain size exceeding that of the silver catalyst, the solid material being mixed with the said silver catalyst; this compound that withstands compression load is formed in a first calender such that a homogeneous thin catalyst band is obtained, then being rolled in a second calender to press electrically conductive material upon the catalyst band,
**characterized in that** an interim heating takes place between the first and second calenders by means of a heater, such that at least a part of the wetting filler matgerial is removed.

2. Gas diffusion electrode to be produced by the method described in the preceding Claim 1.

3. Gas diffusion electrode in accordance with the preceding Claim 2, encompassing the following components:
• A catalyst which has an adapted pore structure with pore sizes of 5 to 20 µm and the surface material of which has hydrophobic properties;
• the catalyst material is selected from a group of silver amalgamated, nickel, manganese dioxide, carbon and platinum, and
• PTFE and / or PE being also added to the catalyst to make it hydrophobic.

4. Gas diffusion electrode in accordance with the preceding Claim 3,
**characterized in that** the electrolytes consist of caustic potash solution or caustic soda solution.

## Revendications

1. Procédé pour la fabrication d'une électrode à diffusion de gaz (EDG), à partir du matériel suivant : un catalyseur en argent est appliqué sur un substrat en PTFE, le système des pores du catalyseur en argent étant rempli d'une matière de charge, avec une propriété d'humidification, un corps solide à dimensions stables, avec une grosseur de grain dépassant celle du catalseur en argent , étant mélangé avec le catalyseur en argent ; le dit matériau est résistant à la force de compression et est ensuite formé par un premier laminoir à cylindres, de telle matière que la bande soit homogène et d'une faible épaisseur ; la dite bande est ensuite laminée par un deuxième laminoir à cylindres pour presser et fixer un conducteur électrique sur la bande de catalyseur ;
**caractérisé en ce que** le chauffage intérimaire a lieu entre le premier et le deuxième laminoir à cylindres, à l'aide d'un dispositif de chauffage, de telle sorte que, au moins, une partie de la matière en charge, avec une propriété d'humidification, soit évacuée.

2. Électrode à diffusion de gaz, qui est fabriquée selon la revendication No. 1.

3. Électrode à diffusion de gaz, selon la revendiaction No. 2, qui englobe :
- un catalyseur doté d'une structure de pores d'une dimension de 5 à 20 µm et dont le matériau de surface possède des propriétés hydrophobes ;
- le matériau du catalyseur étant choisi d'un groupe d'argent, du type amalgamé, nickel, dioxyde de manganèse, carbone et platinum ;
- le catalyseur étant rendu hydrophobe par un apport additionnel de PTFE et/ou PE.

4. Électrode de diffusion de gaz, selon la revendication No. 3,
caratérisé en ce que les électrolytes alcalins sont la lessive de potasse et la lessive de soude caustique.
